# EUROPEAN PATENT APPLICATION

(11) **EP 4 832 740 A1**
(43) Date of publication of application: **28.10.2026**
(21) Application number: 26168591.1
(22) Date of filing: 27.03.2026
(51) Int. Cl.: H10W 46/00, H05K 1/02, H04L 9/08, G06F 21/73, G06F 21/44, G06K 19/067

(54) **AUTHENTICATION DEVICE**

(30) Priority: 25.04.2025 US 202519190356
(71) Applicant: NXP B.V., 5656 AG Eindhoven (NL)
(72) Inventor: Verhoeven, Henri, 5656AG Eindhoven (NL); van Beurden, Nicolaas Johannes Henricus Maria, 5656AG Eindhoven (NL)
(74) Representative: Schwarzweller, Thomas

(57) **Abstract**

One example discloses an authentication device, including: an electrical circuit embedded in a package; an external authentication element having a first code and visible on an external surface of the package; an internal authentication element having a second code and embedded within the electrical circuit; wherein the second code is a physical structure; wherein the authentication device is configured to be coupled to a detector; and wherein the detector is configured to determine if the first code is authentically associated with the second code.

## Description

The present specification relates to systems, methods, apparatuses, devices, articles of manufacture and instructions for determining if a semiconductor chip and its package are authentic.

### SUMMARY

According to an example embodiment, an authentication device, comprising: an electrical circuit embedded in a package; an external authentication element having a first code and being visible on an external surface of the package; an internal authentication element having a second code and being embedded within the electrical circuit; wherein the second code is a physical structure; wherein the authentication device is configured to be coupled to a detector; and wherein the detector is configured to determine if the first code is authentically associated with the second code.

In another example embodiment, the first code is either stamped, printed, etched or glued to the external surface of the package.

In another example embodiment, the first code is configured to be read using an optical scanner in response to reflected light from an optical energy source.

In another example embodiment, the second code is formed within a protected layer of a semiconductor chip or circuit board.

In another example embodiment, the second code is configured to be read using an x-ray scanner in response to, or on response to illumination by, an x-ray energy source.

In another example embodiment, the second code is a part of the electrical circuit.

In another example embodiment, the detector is configured to receive a first set of signals from the electrical circuit if the second code is present, and receive a second set of signals from the electrical circuit if the second code is missing.

In another example embodiment, presence of the second code creates a first predetermined electrical imbalance in the electrical circuit; and absence of the second code creates a second predetermined electrical imbalance in the electrical circuit.

In another example embodiment, the electrical circuit includes a set of capacitors having a set of conductive plates; and the internal authentication element having the second code is embedded within at least one of the conductive plates.

In another example embodiment, the second code corresponds to a predetermined amount of material having been removed from at least one of the conductive plates.

In another example embodiment, the predetermined amount of removed material creates a predetermined electrical imbalance in the electrical circuit.

In another example embodiment, the detector is configured to detect if the predetermined electrical imbalance exists within the electrical circuit;

In another example embodiment, the set of capacitors are configured as a Wheatstone Bridge circuit.

In another example embodiment, the detector is configured to detect if the predetermined electrical imbalance exists within the Wheatstone Bridge circuit.

In another example embodiment, the detector is galvanically coupled to the internal authentication element.

In another example embodiment, the detector is wirelessly coupled to the internal authentication element.

In another example embodiment, the detector is embedded within the package.

In another example embodiment, the detector is configured to determine if the first code is authentically associated with the second code either during an initialization routine when the electrical circuit is first powered on, or periodically while the electrical circuit is already powered on.

In another example embodiment, the external authentication element and the internal authentication element are aligned with respect to each other, such the detector illuminates both elements resulting in an interference pattern that provides an indication that the electrical circuit is authentic or counterfeit.

In another example embodiment, further comprising a controller coupled to the detector; wherein the controller is configured to set an operational state of the electrical circuit to functional if the first code is authentically associated with the second code; and wherein the controller is configured to set the operational state of the electrical circuit to non-functional if the first code is not authentically associated with the second code.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figures 1A, 1B, 1C represent example devices with authentication elements.
Figure 2 represents an example semiconductor device with authentication detection elements.
Figures 3A and 3B represent a first example authentication device within the example semiconductor device.
Figure 4 represents a second example authentication device within the example semiconductor device.
Figure 5 represents a third example authentication device within the example semiconductor device.
Figure 6 represents an example set of controller logic within the example semiconductor device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Semiconductor chips, electronic devices and other circuits are susceptible to being counterfeited. Such counterfeit chips and circuits are typically of inferior quality and can be quite dangerous when used in many safety critical systems and devices such as vehicles, medical, and communications.

As Functional Safety for such safety critical applications becomes more important, OEM manufactures are likely to ask their suppliers to prove that their chips, electronic devices, etc. are authentic and/or belong in a particular application. Such verifications of authenticity would also help protect the supplier's brand and reputation.

Current authentication techniques can be either vague, ambiguous, and/or cost and/or time prohibitive. These techniques may include: looking at a printed label, reverse engineering the electrical device, or even decapsulating a chip package and applying X-ray tomography to scan various layers of the chip.

Now discussed are systems, circuits and devices configured to improve functional safety by detecting an authenticity of an integrated circuit (IC), a device, a system, etc.

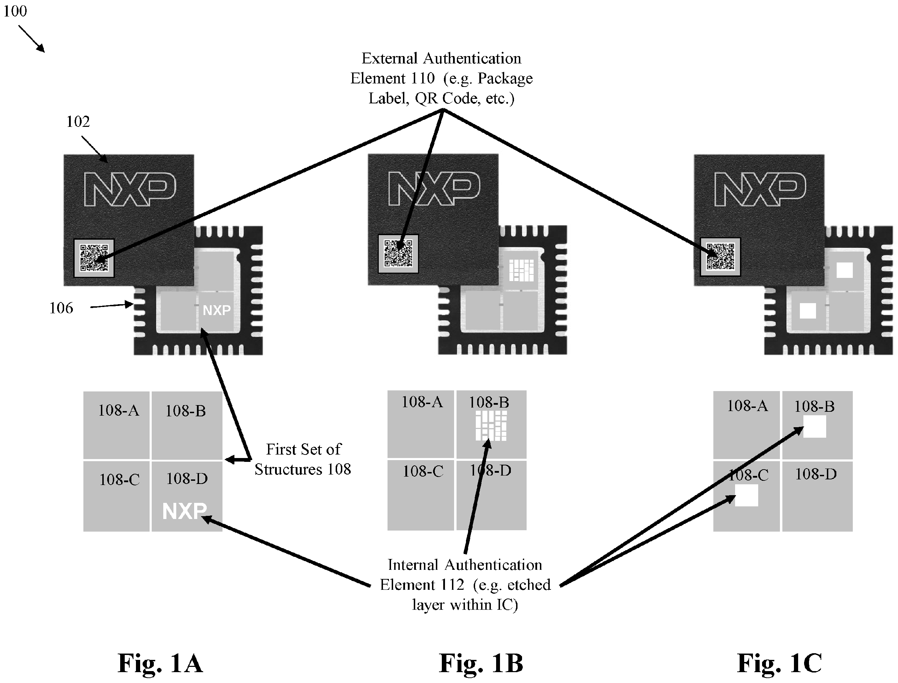

Figures 1A, 1B, 1C represent example devices 100 with authentication elements. The example devices 100 shown here include an encapsulation material 102 around an electrical circuit (e.g. chip, integrated circuit (IC), circuit board, etc.). Portions of a lead frame 106 are also shown. Each of the example devices 100 include a first set of structures 108 (e.g. four package add-on regions) including a first add-on region 108-A, a second add-on region 108-B, a third add-on region 108-C, and a fourth add-on region 108-D. Underneath the first set of structures 108 a dielectric layer may be included over the electrical circuit.

Each of the example devices 100 include an external authentication element 110 and an internal authentication element 112.

The external authentication element 110 includes a first code that is visible on an external surface of the example device 100 (e.g. package), such as shown in Figures 1A, 1B, 1C. The external authentication element 110 acts as a visual authentication indicator that can be stamped, printed, etched, glued, etc. onto the outer surface of the example device 100 so that it can be optically imaged by a person or optical scanner of some sort.

The internal authentication element 112 includes a second code (e.g. marker, characteristic data, imbalance, etc.) and is embedded within the electrical circuit and is not optically visible from an external surface of the example device 100. The second code is a physical structure formed within more layers of the electrical circuit (e.g. in a protected layer or a metallization layer of a semiconductor chip, in one of the layers of a circuit board, or otherwise hidden from being externally viewed).

In the example devices 100 shown in Figures 1A, 1B, 1C the second code is formed within the first set of structures 108 as a set of missing, etched away, vias, material removal, and/or material addition. For example, the second code in Figure 1A is formed in the fourth add-on region 108-D as a company logo. The second code in Figure 1B is formed in the second add-on region 108-B as a QR code. The second code in Figure 1C is formed in both the second add-on region 108-B and the third add-on region 108-C as a set of squares.

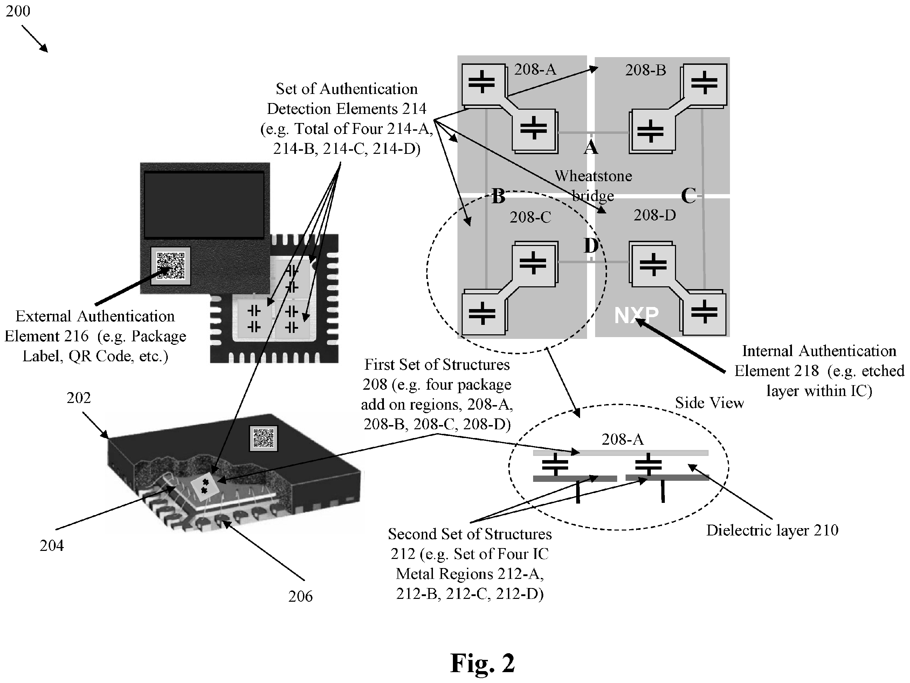

A detector (not shown in Figure 1, but examples are shown in Figures 2, 3, 4, 5, 6) is configured to be coupled to both the external authentication element 110 and the internal authentication element 112 and determine if the first code is authentically associated with the second code. If the detector determines that the first code is authentically associated with the second code then the detector outputs a first signal that the example device 100 is authentic. However, if the detector determines that the first code is not authentically associated with the second code then the detector outputs a second signal that the example device 100 is counterfeit.

The phrase "authentically associated with" is herein defined to include an application specific determination by the detector that the second code is defined by a user (e.g. a manufacturer, aggregator, etc.) to be properly (e.g. authentically) matched to and/or associated with the first code. For example, a chip manufacturer may embed the second code as a physical structure in the chip. The chip manufacturer then sends the chip to a packaging vendor who embeds the chip into an electrical device (e.g. an encapsulated circuit) and then stamps the first code on an outside of the electrical device. If the chip manufacturer has approved of the packaging vendor (e.g. perhaps through a commercial contract) then the first code and the second codes are "authentically associated with" each other.

Other circuits (not shown) can be coupled to receive these signals and act accordingly. For example if the first signal indicating that the example device 100 is authentic is output by the detector, then these other circuits may be put in a first mode of operation (e.g. to permit a vehicle to be started or a machine to be operated). However, if the second signal indicating that the example device 100 is not authentic is output by the detector, then these other circuits may be put in a second mode of operation (e.g. shut-down, prevent a vehicle from being started or a machine to be operated). More examples are provided below.

The detector can either be galvanically (e.g. hard-wired) coupled to the internal authentication element or wirelessly (e.g. RFID, WiFi, BLE) coupled to the internal authentication element. The detector can either be embedded within the example device's 100 package, or external to the package.

The detector can be configured to determine if the first code is authentically associated with the second code during an initialization routine when the example device 100 is first powered on, and/or periodically while the example device 100 is already powered on.

In some example embodiments, the external authentication element 110 and the internal authentication element 112 may be aligned with respect to each other, such that a minimally invasive detector (e.g. X-ray scanner) could illuminate both elements 110, 112 so as to result in an interference pattern that provides an indication that the example device 100 is authentic or counterfeit.

Figure 2 represents an example semiconductor device 200 with authentication detection elements. The example semiconductor device 200 includes an encapsulation material 202, an integrated circuit (IC) 204, and a lead frame 206. Additionally the example semiconductor device 200 includes a first set of structures 208 (e.g. four package add-on regions), a dielectric layer 210, and a second set of structures 212 (e.g. four existing metal regions on the IC 204).

The first set of structures 208, the dielectric layer 210, and the second set of structures 212 may individually or each include one or more sub-elements. For example, in this example embodiment the first set of structures 208 includes first, second, third and fourth add-on regions 208-A, 208-B, 208-C, 208-D, and the second set of structures 212 includes first, second, third and fourth metal regions 212-A, 212-B, 212-C, 212-D.

In some example embodiments the add-on regions 208-A, 208-B, 208-C, 208-D may be added to the second semiconductor device 200, while in other example embodiments an existing set of structures within the second semiconductor device 200 are re-used for the add-on regions 208-A, 208-B, 208-C, 208-D. Similarly, the metal regions 212-A, 212-B, 212-C, 212-D may in some example embodiments be separate from the IC 204, but in other example embodiments are an existing set of structures of the IC 204.

The first set of structures 208-A, 208-B, 208-C, 208-D, the dielectric layer 210, and the second set of structures 212-A, 212-B, 212-C, 212-D together form a set of authentication detection elements 214 (i.e. first capacitor 214-A, second capacitor 214-B, third capacitor 214-C, fourth capacitor 214-D).

An external authentication element 216 (e.g. package label, QR Code, etc.) and an internal authentication element 218 (e.g. etched layer within IC) are also shown.

Note, the first set of structures 208-A, 208-B, 208-C, 208-D in Figure 2 correspond to the first set of structures 108-A, 108-B, 108-C, 108-D in Figures 1A, 1B, 1C. Thus the internal authentication element 112 (i.e. second code) formed within the first set of structures 108 as a set of missing, etched away, vias, material removal, and/or material addition, corresponds to the internal authentication element 218 (i.e. second code) formed within the first set of structures 208-A, 208-B, 208-C, 208-D in Figure 2. The set of authentication detection elements 214-A, 214-B, 214-C, 214-D are thus configured to detect the second code embedded into one or more of the first set of structures 208-A, 208-B, 208-C, 208-D.

While in this example embodiment the set of authentication detection elements 214 are capacitors, in other example embodiments, the set of authentication detection elements 214 may be formed using other electrical components, circuits, etc. and/or mechanical elements, switches, etc. Also, these capacitors 214-A, 214-B, 214-C, 214-D may be implemented in a variety of forms, including as a SMD, a metal ring, and a finger capacitor for cracking/tearing detection.

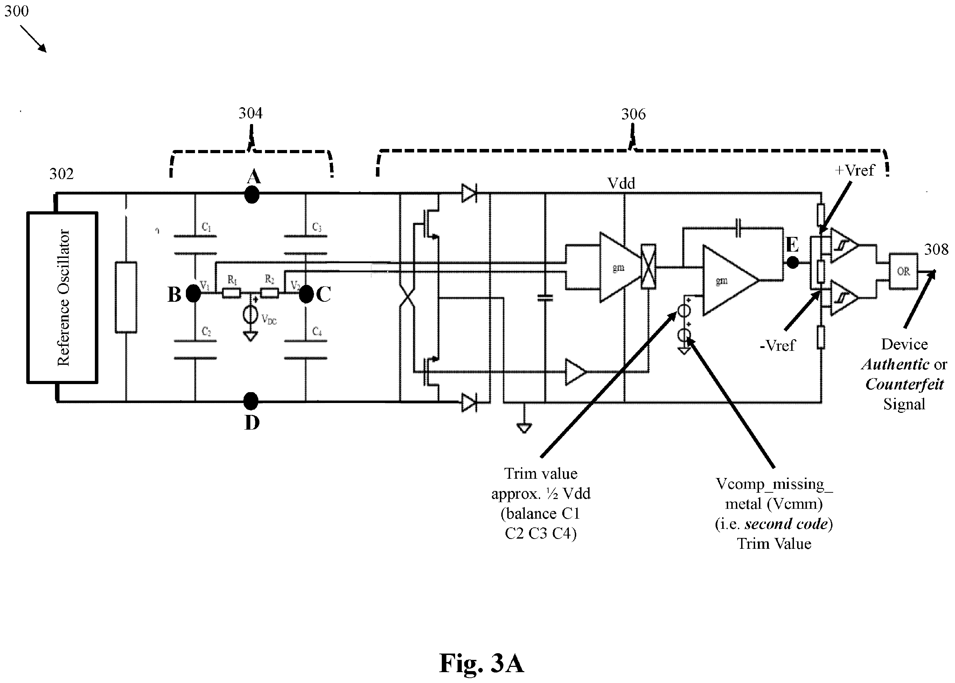

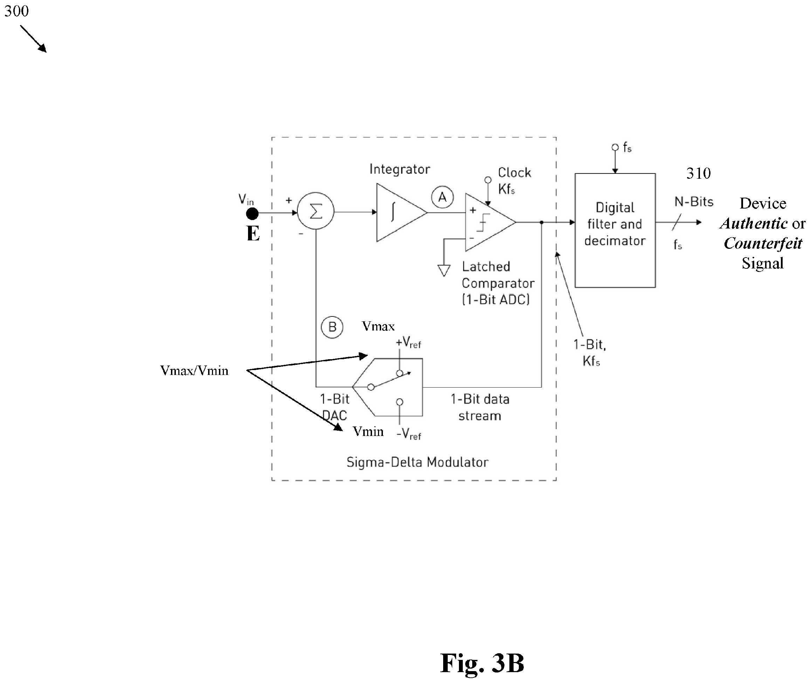

The second semiconductor device 200 also includes a controller (examples of which are shown in Figures 3, 4, 5) embedded in IC 204.

Here since the set of authentication detection elements 214 are formed by capacitors, these capacitors can be configured as a Wheatstone Bridge as shown in Figure 2, thereby enabling the controller to detect more complicated and/or subtle internal authentication element 218 (i.e. second codes).

The controller is coupled to the set of authentication detection elements 214 and configured to set an operational state of the IC 204 based on a value (e.g. a variable, an on/off state, etc.) of the set of authentication detection elements 214. This value is influenced by the internal authentication element 218 (i.e. second code).

Examples of these operational states include: setting the IC and/or package to fully functional if the semiconductor device 200 is authentic; and setting the IC and/or package to non-functional if the semiconductor device 200 is counterfeit.

Remediation actions may also include shutting down a set of critical IC 204 functionality and keeping a set of non-critical functionality activated; shutting down the IC's 204 command and control functionality while keeping the IC's 204 collection and transmission of sensor data activated; and/or resetting/rebooting the IC 204.

Together, the controller and the set of authentication detection elements 214 form a authentication device that enables the IC 204 to have a higher level of functional safety by detecting whether the IC 204 is authentic or counterfeit.

Figures 3A and 3B represent a first example authentication device 300 within the example semiconductor device 200.

Figure 3A shows a first portion of the first example authentication device 300 and includes a reference oscillator 302, Wheatstone Bridge circuit 304 (showing connection points A, B, C, D as shown in Figure 2), authentication detection circuitry 306, and a first output 308.

Note in some example embodiments a Vcomp_missing_metal (Vcmm) trim value is calibrated to an expected imbalance in the Wheatstone Bridge circuit 304 if the internal authentication element 218 (i.e. second code) is present in the semiconductor device 200.

The first output 308 is configured to carry a binary signal. The binary signal has a first signal state indicating that the semiconductor device 200 is authentic, and a second signal state indicating that the semiconductor device 200 is counterfeit. The binary signal is properly set due to the Vcomp_missing_metal (Vcmm) trim value.

Figure 3B shows a second portion of the first example authentication device 300. The second portion receives a variable signal from point "E" in Figure 3A. The second output 310 is configured to carry a variable package authentic signal that gives a more precise warning that an ID and/or package may be counterfeit.

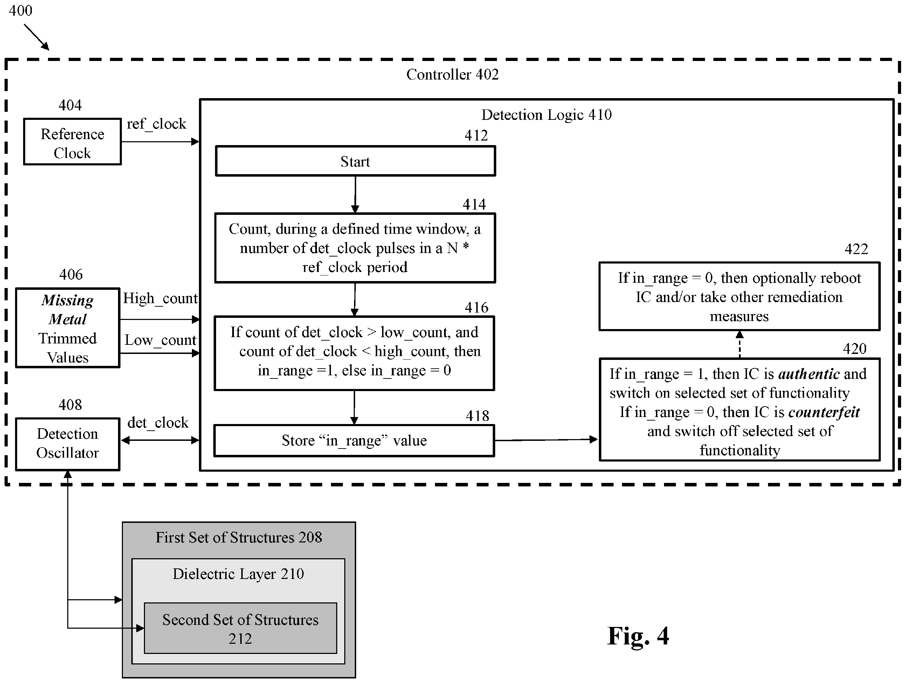

Figure 4 represents a second example authentication device 400 within the example semiconductor device 200 (e.g. IC). The second example authentication device 400 includes a controller 402, a reference clock 404, a set of missing metal trimmed values 406 corresponding to the internal authentication element 218 (i.e. the second code), a detection oscillator 408, and detection logic 410.

In this example, the detection oscillator 408 uses a capacitance formed by the four Wheatstone Bridge capacitors 214 (i.e. set of authentication detection elements formed by the first set of structures 208, the dielectric layer 210, and the second set of structures 212) to set a frequency of the detection oscillator 408.

If the semiconductor device 200 is authentic, then the frequency of the detection oscillator 408 remains fixed or within a predetermined range of frequencies. However, if the capacitance formed by the four Wheatstone Bridge capacitors 214 is not as expected, then the frequency of the detection oscillator 408 changes and falls outside of the predetermined range of frequencies, thereby indicating that the semiconductor device 200 is counterfeit.

In this example embodiment the detection logic 410 receives the reference clock 404 (e.g. available on the IC); the missing metal trimmed values 406 (e.g. high_count and low_count value, one time programmed) and the detection oscillator 408.

The detection logic 410 in step 412 starts. Next in step 414, a Count (during a defined time window, a number of det_clock pulses in a N * ref_clock period) is measured. In step 416, if count of det_clock > low_count, and count of det_clock < high_count, then in_range =1, else in_range = 0. In step 418, store in_range value. In step 420, if in_range = 1, then IC is authentic and switch on functionality. If in_range = 0, then IC is counterfeit and switch off functionality. Then in step 422, if in_range = 0, then optionally reboot IC and/or take other remediation measures.

In other example embodiments, instead of using the frequency of the detection oscillator 408 to detect authentication, a Q-factor amplitude (e.g. resistive losses) of the detection oscillator 408 could be used. The Q-factor amplitude will drop if the IC is counterfeit. Voltage levels are another indication.

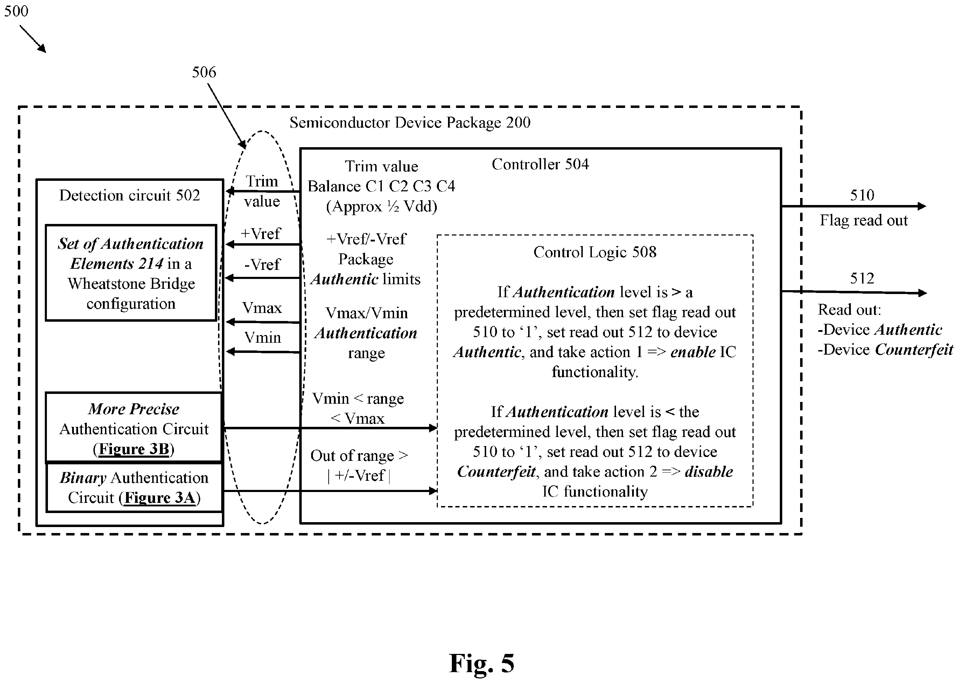

Figure 5 represents a third example authentication device 500 within the example semiconductor device 200. The third example authentication device 500 includes a detection circuit 502 and a controller 504.

The detection circuit 502 includes the set of authentication detection elements 214 in a Wheatstone Bridge configuration, a binary authentication circuit (e.g. see Figure 3A), and a more precise authentication circuit (e.g. see Figure 3B).

The controller 504 exchanges a set of signals 506 with the detection circuit 502 using a set of control logic 508. Based on the set of signals 506, the control logic 508 outputs on a first output 510 a binary flag read out and on a second output 512 an authentic/counterfeit signals. The binary flag on 510 can be used as an interrupt level for an external system, that is then examines the signal on the second output 512 to determine the specific authentication condition.

For example, if authentication level is > a predetermined level, then set flag read out 510 to '1', set read out 512 to device authentic, and take action 1 => enable IC functionality. However, if authentication level is < the predetermined level, then set flag read out 510 to '0', set read out 512 to device Counterfeit, and take action 2 => disable IC functionality.

In an alternate embodiment, the first output 510 can be deleted, and an external system programmed to periodically poll for signals on the second output 512. Other interfaces for communicating the various authentication signals to one or more external systems may include I2C, SPI, wireless, etc. interfaces.

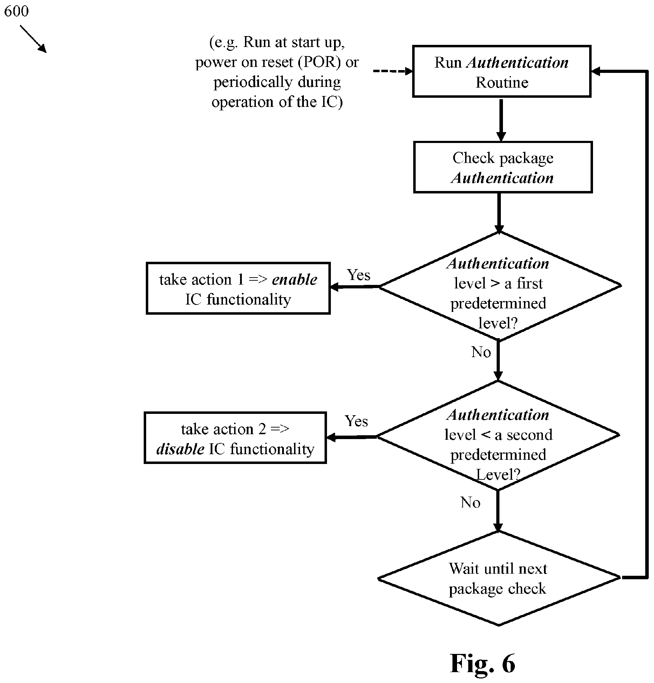

Figure 6 represents an example set of controller logic 600 within the example semiconductor device 200. The controller logic 600 can also be incorporated into the control logic 508 of Figure 5.

Various instructions and/or steps discussed above can be executed in any order, unless a specific order is explicitly stated. Also, those skilled in the art will recognize that while some example sets of instructions/steps have been discussed, the material in this specification can be combined in a variety of ways to yield other examples as well, and are to be understood within a context provided by this detailed description.

In some example embodiments these instructions/steps are implemented as functional and software instructions. In other embodiments, the instructions can be implemented either using logic gates, application specific chips, firmware, as well as other hardware forms.

When the instructions are embodied as a set of executable instructions in a non-transitory computer-readable or computer-usable media which are effected on a computer or machine programmed with and controlled by said executable instructions. Said instructions are loaded for execution on a processor (such as one or more CPUs). Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

As used herein, "predefined" is equivalent to "predetermined" and indicates a value or setting that is tuned for a particular application/embodiment/instance of the described and/or claimed subject matter.

## Claims

1. An authentication device, comprising:
an electrical circuit embedded in a package;
an external authentication element having a first code and visible on an external surface of the package; and
an internal authentication element having a second code and embedded within the electrical circuit;
wherein the second code is a physical structure;
wherein the authentication device is configured to be coupled to a detector; and
wherein the detector is configured to determine if the first code is authentically associated with the second code.

2. The authentication device of claim 1:
wherein the first code is a one of stamped, printed, etched, and glued to the external surface of the package.

3. The authentication device of claim 1 or 2:
wherein the first code is configured to be read using an optical scanner in response to reflected light from an optical energy source.

4. The authentication device of any preceding claim:
wherein the second code is formed within a protected layer of a semiconductor chip or circuit board.

5. The authentication device of any preceding claim:
wherein the second code is configured to be read using an x-ray scanner in response to an x-ray energy source.

6. The authentication device of any preceding claim:
wherein the second code is a part of the electrical circuit.

7. The authentication device of claim 6:
wherein the detector is configured to receive a first set of signals from the electrical circuit if the second code is present, and receive a second set of signals from the electrical circuit if the second code is missing.

8. The authentication device of any preceding claim:
wherein presence of the second code creates a first predetermined electrical imbalance in the electrical circuit; and
wherein absence of the second code creates a second predetermined electrical imbalance in the electrical circuit.

9. The authentication device of any preceding claim:
wherein the electrical circuit includes a set of capacitors having a set of conductive plates; and
wherein the internal authentication element having the second code is embedded within at least one of the conductive plates.

10. The authentication device of claim 9:
wherein the second code corresponds to a predetermined amount of material having been removed from at least one of the conductive plates.

11. The authentication device of claim 10:
wherein the predetermined amount of removed material creates a predetermined electrical imbalance in the electrical circuit.

12. The authentication device of claim 11:
wherein the detector is configured to detect if the predetermined electrical imbalance exists within the electrical circuit;

13. The authentication device of any of claims 10 to 12:
wherein the set of capacitors are configured as a Wheatstone Bridge circuit.

14. The authentication device of claim 13:
wherein the detector is configured to detect if the predetermined electrical imbalance exists within the Wheatstone Bridge circuit.

15. The authentication device of any preceding claim:
wherein the detector is galvanically coupled to the internal authentication element.
